# EUROPEAN PATENT APPLICATION

(11) **EP 0 611 521 A1**
(43) Date of publication of application: **24.08.1994**
(21) Application number: 94500025.5
(22) Date of filing: 11.02.1994
(51) Int. Cl.: A01K 5/02

(54) **Improved wet feed hopper for pigs**

(30) Priority: 16.02.1993 ES 9300398 U
(71) Applicant: Romeu Guardia, Gener, E-25310 Agramunt (Lérida) (ES)
(72) Inventor: Romeu Guardia, Gener, E-25310 Agramunt (Lérida) (ES)
(74) Representative: Isern-Cuyas, Jaime (ES)

(57) **Abstract**

Improved wet feed hopper for pigs which is made from a lower body (1) one-piece integrally constructed and comprising additionally a ramp (17) for the product or feed to be used to fall down, to which ramp (17) is fitted an adjustable metering device (12,13,14,15) with a rod (5). This metering device (12,13,14,15) is able to supply the most estrictly necessary quantity of product into the bowl (3) by moving a retractable metering hatch (12) which is being bumped by the pig. This hopper receives upwardly successive central bodies which with the seals (7) are tightly hermetically joined in an alternative way, the hopper volume can thus be increased.

## Description

The present patent application relates to an improved wet feed hopper for pigs, having remarkable advantages and innovations compared with the prior art feed hoppers used for similar or equal purposes.

This improved wet feed hopper for pigs is characterized in that it has a highly constructive simplicity meaning that sharpless-edged blunt bodies and a pressurized practical engagement system allowing to add successive upper bodies on the hopper can be used, the hopper volume can thus be increased and this type of hopper having also a witty metering device of the product or feed to be supplied, the device assuring consequently a remarkable feed use-cutting. All these characteristics and still further other ones are exhaustively described hereinafter as related to a practical but non-exhaustive representative embodiment of the present invention.

To achieve a more detailed description of the present invention, reference will be made in the description of the attached figures, wherein a preferred way of embodiment by way of a non-exhaustive example has been illustrated.

In the drawings:

Figure 1 shows respective plan, elevation and profiled dihedric views of the feed hopper of the present invention.

Figure 2 pertains to the previous elevation and profiled views, partly cross-sectioned to show the metering device and the receptive bowl or plate of the product to be eaten.

Figure 3 shows a detail of the assembly of the successive bodies defining hopper variable volume.

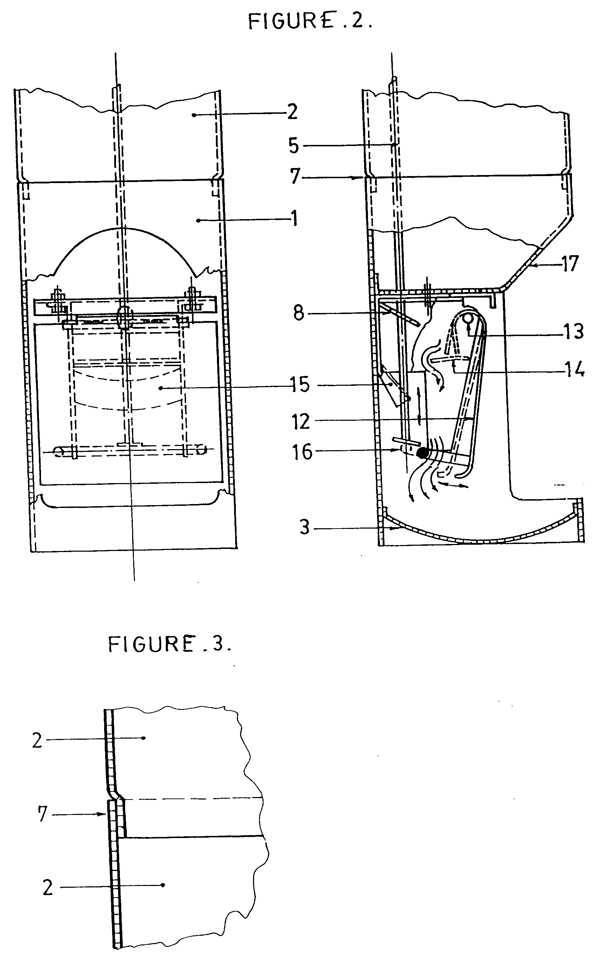

Returning to the figures, it can be seen in the illustrated embodiment, an improved wet feed hopper for pigs of the type shown, the hopper being made from a lower body 1 provided with a ramp 17 for the product or feed falling into receptive bowl or plate 3 with access thereto by the window 4. This lower body 1 is an integrally one-piece component; both the ramp 17 wherein the metering device is fastened and also the product or feed receptive bowl or plate 3, as shown in figure 2, because of being an one-piece component system prevent all kind of assemblies and have a limitless life.

Also the product or feed receptive bowl or plate 3 do not have corners nor sharp edges which might retain or accumulate feed wastes or other components, a complete advantage of the supplied product is thereby taken.

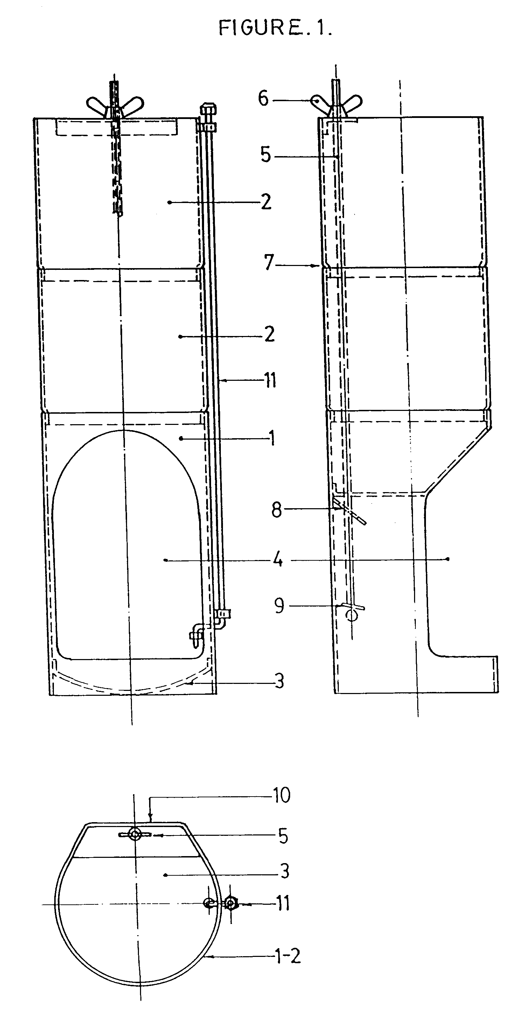

On this body 1 successive central bodies 2 through assembly seals 7 (figure 3) are being fitted. The assembly of said central bodies 2 is simple enough, since by only pressing one against the other, they remain fully registered, fixed and making up a tight hermetical seal. In this way, a great advantage is achieved because the volume of said hopper can be increased as required by only accommodating as many central bodies 2 as the owner conveniently wished and the dimensions of the plant or room whereto the hopper is located can thus be adjusted, as shown in figure 1.

All the bodies 1 and 2 by their rear side have alongside a flat portion 10, which purpose is to provide them with a perfect seat when assembled on the walls or columns, preventing therefore any damages and other breakages occurring, since the pig when eating constantly is bumping against said hopper. This is another advantage as compared with the prior art hoppers which are fully cylindrical and have only a contact line on the wall or column to fasten to, therefore their life is limited.

The hopper has the relevant water supply 11 so that the product or feed can conveniently be wetted.

The product or feed fall into the bowl or plate 3 is simply caused when the pigs move a metering hatch 12, as shown in figure 2, this metering hatch subsequently returning to its initial position.

The system has a metering device 12-13-14-15 made with stainless materials to prevent oxides to jeopardize the quality and health of the product to be used. Said metering device can be adjusted to several positions with a rod 5, whereby a perfect supply of product or feed is achieved, as required.

The metering device is operating when said hatch 12 bumped by the pig is rotating around a shaft 13 pushing the product falling from the ramp 17 to the retaining support 14 through a curved sheet steel 15 which is guiding the product supply.

Also the rod 5 allows the feed supply to be adjusted from a wing-nut system 6. Said rod 5 is registered in a flatbar 8 and the product supplying hatch is adjusted with a lower stop 9 bearing on a support 16.

In this way, with the metering device duly adjusted the product use is the most strictly required in each case, thereby product or feed unnecessary expenses are avoided.

## Claims

**1.-** Improved wet feed hopper for pigs of the type comprising a prismatic body provided with a water supply 11 so that the product or feed located into a lower bowl 3 accessible from a window 4 can be wetted, essentially characterized in that it is made from a lower body 1 one-piece integrally constructed and comprising additionally a ramp 17 for the product or feed to be used to fall down, to which ramp is fitted an adjustable metering device 12-13-14-15 with a rod 5, being able said metering device to supply the most strictly necessary quantity of product into the bowl 3 by moving a retractable metering hatch 12 which is being bumped by the pig; said hopper upwardly receiving successive central bodies 2 which with the seals 7 are tightly hermetically joined in an alternative way, the hopper volume can thus be increased.

**2.-** Feed hopper, according to the previous claim, characterized in that the metering device comprises said hatch 12 which on being bumped by the pig rotates around a shaft 13, pushing by its upper end the product which has fallen over a retaining support 14 from said ramp 17 and being supplied by a curved sheet steel 15 operating as a guide for the product.

**3.-** Feed hopper, according to claims 1 and 2. characterized in that the rod 5 adjusting the feed supply is registered in a flatbar 8 with its position being fixed for instance by a wing-nut system 6, the product supply hatch being adjusted with a lower stop 9 bearing on the support.

**4.-** Feed hopper, according to claims 1 to 3, characterized in that the bodies 1 and 2 are having alongside in the rear portion a flat area 10 providing a perfect seat for the hopper on the walls or columns, protecting the hopper from repeated blows caused by clashes of pigs themselves against said metering hatch 12.
